# EUROPÄISCHE PATENTANMELDUNG

(11) **EP 1 256 901 A2**
(43) Veröffentlichungstag der Anmeldung: **13.11.2002**
(21) Anmeldenummer: 02010554.0
(22) Anmeldetag: 10.05.2002
(51) Int. Cl.: G06K 11/00

(54) **Vorrichtung zum Erfassen von Schiebe- und Drehbewegungen als Dateneingabevorrichtung für einen Computer**

(30) Priorität: 12.05.2001 DE 10123182
(71) Anmelder: FRAUNHOFER-GESELLSCHAFT ZUR FÖRDERUNG DER ANGEWANDTEN FORSCHUNG E.V., 80636 München (DE)
(72) Erfinder: Fröhlich, Bernd, 30163 Hannover (DE); Plate, John, 53229 Bonn (DE); Mulack, Lothar, 53721 Siegburg (DE)
(74) Vertreter: Hilleringmann, Jochen, Dipl.-Ing.

(57) **Zusammenfassung**

Die Vorrichtung zur Erfassung von Schiebe- und Drehbewegungen eines eine Längsachse aufweisenden länglichen Gegenstandes, insbesondere eines Stabes, entlang der Längsachse und um die Längsachse für die Dateneingabe eines Computers ist mit einem Halteelement (18) versehen, an dem der Gegenstand (12) entlang seiner Längsachse (22) verschiebbar und um seine Längsachse (22) drehbar gelagert ist. An dem Gegenstand (12) ist ein erster Mitnehmer (30) angeordnet. Ferner weist die Vorrichtung ein Drehelement (24) auf, das an dem Halteelement (18) um die Längsachse (22) des Gegenstandes (12) drehbar gelagert und gegen Bewegungen in Richtung der Längsachse (22) des Gegenstandes (12) gesichert angeordnet ist und das einen mit dem ersten Mitnehmer (30) des Gegenstandes (12) zusammenwirkenden zweiten Mitnehmer (34) aufweist. Zur Erfassung der Drehbewegung des Drehelements (24) und zur Erzeugung eines die Drehstellung des Drehelements (24) repräsentierenden Signals dient ein Drehwinkelaufnehmer (48). Mittels eines Wegaufnehmers (60) wird die Bewegung des Gegenstandes (12) bei dessen Verschiebung in Richtung der Längsachse (22) erfasst und ein die Verschiebeposition des Gegenstandes (12) repräsentierendes Signal erzeugt.

## Beschreibung

Die Erfindung betrifft eine Vorrichtung zur Erfassung von Schiebe- und Drehbewegungen eines eine Längsachse aufweisenden länglichen Gegenstandes, insbesondere eines Stabes, entlang der Längsachse und um die Längsachse für die Dateneingabe eines Computers.

Für beispielsweise die Steuerung von motorisch bewegbaren Objekten werden schwenkbare Hebel eingesetzt, die auch als "Joy-Stick" bezeichnet werden. Derartige Systeme werden auch für die Cursor-Steuerung sowie für die Befehlseingabe bei Computern eingesetzt.

Aus WO-A-00/14676 ist eine Dateneingabevorrichtung bekannt, die drei längs der Raumachsen verschiebbare und um ihre Längsachsen drehbare Stäbe aufweist, mit denen sich beispielsweise auf einer Anzeigevorrichtung angezeigte Objekte und insbesondere holographisch dargestellte Objekte verschieben lassen.

Der Erfindung liegt die Aufgabe zugrunde, einen konstruktiv einfachen Aufbau für eine Dateneingabevorrichtung für Computer zu schaffen, mit der sich simultan die Schiebe- und Drehbewegungen eines eine Längsachse aufweisenden länglichen Gegenstandes, insbesondere eines Stabes, entlang der Längsachse und um die Längsachse herum erfassen lassen.

Zur Lösung dieser Aufgabe wird mit der Erfindung eine Vorrichtung zur Erfassung von Schiebe- und Drehbewegungen eines eine Längsachse aufweisenden länglichen Gegenstandes, insbesondere eines Stabes, entlang der Längsachse und um die Längsachse für die Dateneingabe eines Computers herum vorgeschlagen, wobei die Dateneingabevorrichtung versehen ist mit
- einem Haltelement, an dem der Gegenstand entlang seiner Längsachse verschiebbar und um seine Längsachse drehbar gelagert ist,
- einem an dem Gegenstand angeordneten ersten Mitnehmer,
- einem Drehelement, das an dem Halteelement um die Längsachse des Gegenstandes drehbar gelagert und gegen Bewegungen in Richtung der Längsachse des Gegenstandes gesichert angeordnet ist und das einen mit dem ersten Mitnehmer des Gegenstandes zusammenwirkenden zweiten Mitnehmer aufweist,
- einem Drehwinkelaufnehmer zur Erfassung der Drehbewegung des Drehelements und zur Erzeugung eines die Drehstellung und/oder Drehstellungsveränderung des Drehelements repräsentierenden Signals und
- einem Wegaufnehmer zur Erfassung der Bewegung des Gegenstandes bei dessen Verschiebung in Richtung der Längsachse und zur Erzeugung eines die Verschiebeposition und/oder Verschiebepositionsänderung des Gegenstandes repräsentierenden Signals.

Bei der erfindungsgemäßen Dateneingabevorrichtung ist der Gegenstand, dessen Schiebe- und Drehbewegungen erfasst werden sollen, an einem Halteelement, beispielsweise einem Gehäuse, entlang seiner Längsachse verschiebbar und um diese Längsachse drehbar gelagert. An dem Gegenstand befindet sich ein erster Mitnehmer, der mit einem zweiten Mitnehmer eines Drehelements zusammenwirkt. Dieses Drehelement dreht sich damit zusammen mit dem Gegenstand. Das Drehelement ist jedoch gegen Schiebebewegungen in Längsachse des Gegenstandes gesichert. Wenn also der Gegenstands relativ zum Drehelement entlang seiner Längsachse bewegt wird, so verschiebt sich das Drehelement nicht mit. Das Drehelement ist wie der Gegenstands zweckmäßigerweise am Halteelement gelagert.

Über einen Drehwinkelaufnehmer wird die Drehbewegung und/oder die Drehbewegungsänderung des Drehelements aufgenommen und in ein die jeweilige Drehstellung des Drehelements und/oder das Ausmaß der Drehbewegung bzw. Drehbewegungsänderung repräsentierendes Signal umgesetzt. Über einen (Linear-)Wegaufnehmer wird die Bewegung des Gegenstandes bei dessen Verschiebung in Richtung seiner Längsachse erfasst und in ein die jeweilige Verschiebeposition und/oder Verschiebepositionsänderung und/oder den zurückgelegten Verschiebeweg des Gegenstandes repräsentierendes Signal umgesetzt.

Bei dem Drehelement handelt es sich zweckmäßigerweise um ein Rohrstück, das den länglichen Gegenstand, bei dem es sich insbesondere um einen Stab handelt, koaxial umgibt. Das Drehelement ist derart ausgestaltet, dass sich der Gegenstand in ihm verschieben lässt. Ganz allgemein bedeutet dies also für ein den Gegenstand aufnehmendes Drehelement, dass dieses eine Innenquerschnittsfläche aufweist, die geringfügig größer als die Außenquerschnittsfläche des Gegenstandes aufweist, so dass dieser mit Spiel in dem Drehelement angeordnet ist.

Das Zusammenwirken der beiden Mitnehmer von Gegenstand und Drehelement kann auf unterschiedliche Weise erfolgen. Bei einer ersten Ausgestaltung ist der Mitnehmer als insbesondere quer zur Längsachse des Gegenstandes von diesem abstehender Vorsprung ausgebildet. Der zweite Mitnehmer ist als am Drehelement angeordneter Aufnahmeschlitz ausgebildet, in den der Vorsprung des Gegenstandes eintaucht. Damit lässt sich das Drehelement unabhängig davon, in welcher Relativverschiebeposition sich der Gegenstand gerade befindet, durch Drehen des Gegenstandes verdrehen.

Die zuvor beschriebene Ausbildung des ersten Mitnehmers als Vorsprungselement des Gegenstandes und des zweiten Mitnehmers als Aufnahmeschlitz des Drehelements kann auch exakt umgekehrt vorgesehen sein. D.h., dass das Vorsprungselement auch am Drehelement und der Aufnahmeschlitz am Gegenstand ausgebildet sein kann.

Eine weitere Möglichkeit des Zusammenwirkens der beiden Mitnehmer besteht darin, dass der erste Mitnehmer als sich in Richtung der Längsachse des Gegenstandes erstreckende Vorsprungsrippe ausgebildet ist, während der zweite Aufnehmer als in Längsrichtung des Gegenstandes verlaufende Aufnahmevertiefung für diese Vorsprungsrippe ausgebildet ist. Auch hier ist es möglich, die Anordnung von Vorsprungsrippe und Aufnahmevertiefung zu vertauschen.

Als Drehwinkelaufnehmer wird zweckmäßigerweise ein Drehpotentiometer eingesetzt, dessen drehbar angeordnetes Betätigungsorgan, zumeist in Form einer Drehwelle, mit dem Drehelement direkt oder indirekt gekoppelt ist. Im letztgenannten Fall erfolgt die Kopplung z.B. über ein Getriebe, insbesondere über Zahnräder. Auf diese Weise wird die Drehbewegung des Drehelements in eine Drehbewegung des Betätigungsorgans des Drehpotentiometers umgesetzt. Das Drehpotentiometer und die Elemente des Getriebes sind zweckmäßigerweise ebenfalls am Halteelement befestigt bzw. gelagert.

Bei dem Wegaufnehmer handelt es sich zweckmäßigerweise um ein Schiebepotentiometer, das parallel zur Längsachse des Gegenstandes ausgerichtet ist und dessen Betätigungsorgan über ein insbesondere am ersten Mitnehmer angeordnetes Mitnehmerelement mit dem Gegenstand gekoppelt ist. Dieses Mitnehmerelement ist vorteilhafterweise als Ringelement ausgebildet, das das Drehelement und den Gegenstand konzentrisch umgibt. Bei dieser Konstellation befindet sich also das Drehelement zwischen dem Gegenstand und dem Ringelement. Das Ringelement weist einen radial abstehenden Flanschteil zum Mitnehmen des Betätigungsorgans des Schiebepotentiometers auf. Bei Vorhandensein lediglich eines Flanschteils greift dieses zweckmäßigerweise in eine Aufnahmevertiefung am Betätigungsorgan des Schiebepotentiometers ein. Weist hingegen das Ringelement zwei axial beabstandete Flanschteile auf, so kann das Betätigungsorgan in den Zwischenraum zwischen diesen beiden Flanschteilen eintauchen. In beiden Fällen kommt es unabhängig von der Drehstellung des Gegenstandes und damit unabhängig von der Drehstellung des Ringelements stets zu einer Kopplung zwischen dem Ringelement und dem Betätigungsorgan des Schiebepotentiometers.

Anstelle eines Schiebepotentiometers kann zur Erfassung von axialen Bewegungen des Gegenstandes auch ein Drehwinkelaufnehmer mit einem Schwenkelement, beispielsweise mit einem Schwenkarm verwendet werden. Der Einsatz eines Drehwinkelaufnehmers zur Erfassung linearer Bewegungen weist allerdings den Nachteil auf, dass die lineare Bewegung erst in eine Schwenkbewegung des Schwenkelementes überführt werden muss, um von dem Drehwinkelaufnehmer aufgenommen werden zu können.

Ferner ist der mit Hilfe des Drehwinkelaufnehmers erfassbare axiale Weg des Gegenstandes von der Längs des Schwenkelementes abhängig. Das hat zur Folge, dass zur Aufnahme großer axialer Wege ein Schwenkelement entsprechender Länge erforderlich ist, was im Vergleich zur Linear-Potentiometers einen unnötig großen Bauraum der Dateneingabevorrichtung nach sich zieht.

Alternativ zur zuvor beschriebenen mechanischen Aufnahme der Schiebe- und Drehbewegungen des Gegenstandes können diese auch berührungslos aufgenommen werden. Hierbei arbeiten der Drehwinkelaufnehmer und/oder der Wegaufnehmer beispielsweise optisch oder magnetisch.

Bei einer weiteren vorteilhaften Ausgestaltung der Erfindung befindet sich an mindestens einem in Längserstreckung des Gegenstandes liegenden Ende ein Druckschalter bzw. Taster, mit dem beispielsweise eine weitere Befehlseingabe vorgenommen werden kann. Der Taster ist dabei zweckmäßigerweise in Richtung der Längsachse des Gegenstandes betätigbar. Vorzugsweise sind beide in Längsachsenerstreckung liegenden stirnseitigen Enden des Gegenstandes mit derartigen Schaltern versehen.

Anstelle bzw. zusätzlich zu den zuvor beschriebenen Schaltern ist es ferner sinnvoll, einen weiteren Drehkodierer vorzusehen, der die Verdrehung eines manuell drehbaren Drehelements detektiert und in ein Signal umsetzt. Dieses weitere Drehelement lässt sich manuell verdrehen und ist beispielsweise in Form eines (Rändel-)Rades ausgeführt. Dieses Rad wird beispielsweise von dem Gegenstand durchdrungen, wird aber bei einer Verdrehung des Gegenstandes nicht mitverdreht. Mit Hilfe dieses Rades lässt sich beispielsweise ein durch die erfindungsgemäße Dateneingabevorrichtung auf einem Bildschirm verfahrbares Objekt drehen. Sicherlich könnte man diese Drehbewegung auch durch Drehung des Gegenstandes der erfindungsgemäßen Dateneingabevorrichtung realisieren. Bei einer manuellen Verschiebung des Gegenstandes kann man oftmals aber nicht ganz verhindern, dass dieser Gegenstand gleichzeitig auch (in diesem Fall dann) ungewollt verdreht wird. Durch entsprechende Ansteuerung des Bildschirmes könnte man die Verdrehung des Gegenstandes unterdrücken, so dass das Objekt auf dem Bildschirm bei Verdrehung des Gegenstandes der erfindungsgemäßen Dateneingabevorrichtung nicht verdreht wird oder gar in eine Verschiebebewegung umgesetzt wird. Eine Drehung des Objekts auf dem Bildschirm erfolgt dann durch manuelles Drehen des weiteren Drehorgans. Aber auch andere Anwendungen betreffend die Nutzung des von dem weiteren Drehkodierers gelieferten Signals sind selbstverständlich denkbar.

In weiterer vorteilhafter Ausgestaltung der Erfindung ist vorgesehen, dass der Gegenstand durch eine Rückstellvorrichtung (z.B. mittels Federn) selbsttätig in eine zuvor definierte Nullposition bzw. -lage überführt wird, wenn die die Verdrehung und/oder Verschiebung des Gegenstandes bewirkenden Kräfte an den Gegenstand nicht mehr angreifen.

Vorteilhaft ist es ferner, wenn auf den Gegenstand durch eine (mechanische oder elektromagnetische) Bremsvorrichtung eine Bremswirkung ausgeübt wird, um z.B. ungewollte Verdrehungen und/oder Verschiebungen des Gegenstandes zu unterbinden.

Schließlich ist es auch zweckmäßig, wenn die erfindungsgemäße Dateneingabevorrichtung mit einem (aktiven) Kraftrückkupplungsmechanismus ausgestattet ist. Dies kann z.B. dadurch erfolgen, dass der Gegenstand mittels Aktuatoren motorisch verschoben und/oder verdreht wird. Mit Hilfe einer aktiven Verdrehung und/oder Verschiebung des Gegenstandes der erfindungsgemäßen Dateneingabevorrichtung ist es möglich, Verdreh- und/oder Verschiebekräfte, die auf ein mit Hilfe des Gegenstandes der erfindungsgemäßen Dateneingabevorrichtung gesteuertes Objekt wirken, in entsprechende Bewegungen (Verschiebungen und/oder Verdrehungen) des Gegenstandes umzusetzen. Als Beispiel sei hier der Fall genannt, bei dem die erfindungsgemäße Dateneingabevorrichtung zur Steuerung eines Objekts auf einem Bildschirm (beispielsweise Spieleanwendung) eingesetzt wird, wobei das Objekt auf dem Bildschirm mit anderen Objekten kollidieren kann. Die dabei auf das gesteuerte Objekt einwirkenden Kräfte können dann für die den Gegenstand betätigende Person dahingehend simuliert und umgesetzt werden, dass auf den Gegenstand über die Aktuatoren Kräfte ausgeübt werden. Damit spürt die den Gegenstand der erfindungsgemäßen Dateneingabevorrichtung betätigende Person die auf das von ihr gesteuerte Objekt wirkenden Rückwirkungskräfte. Die Aktuatoren können hierbei als Schrittmotore ausgeführt sein, die zusätzlich auch die Funktion der Drehwinkel- und Wegaufnehmer des Gegenstandes übernehmen können aber nicht notwendigerweise müssen.

Die Erfindung wird nachfolgend anhand der Zeichnung näher erläutert. In dieser zeigen im einzelnen:
- Fig. 1: eine Seitenansicht einer Dateneingabevorrichtung zur gleichzeitigen Erfassung einer Schiebe- und Drehbewegung eines Stabes mit aufgeschnittenem Gehäuse und
- Fig. 2: einen Schnitt entlang der Linie II-II der Fig. 1.

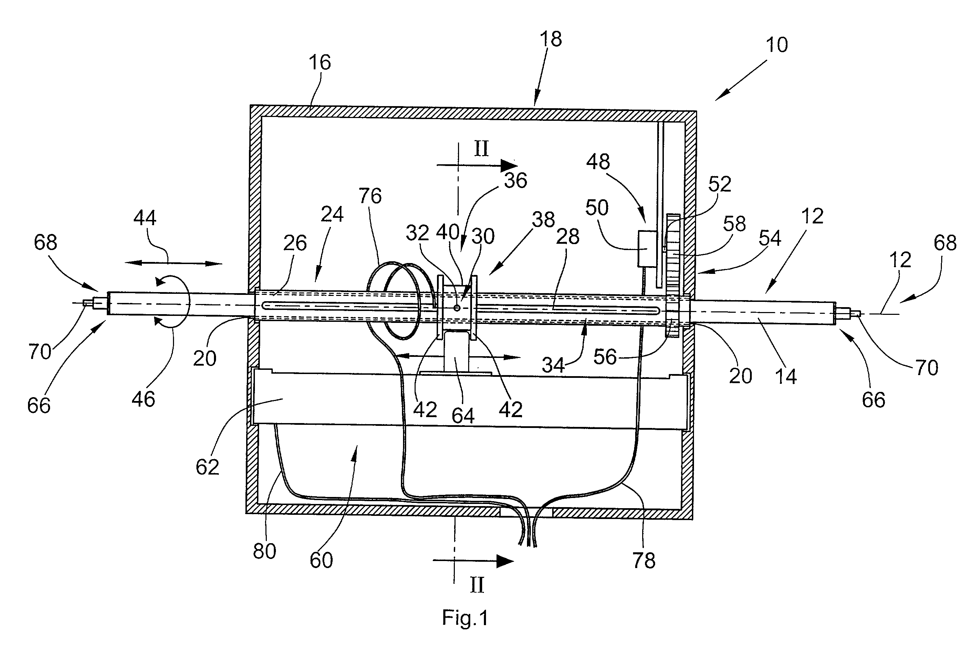

Fig. 1 zeigt die Dateneingabevorrichtung 10 für Computer zur gleichzeitigen Erfassung von Schiebe- und Drehbewegungen eines länglichen Gegenstandes 12 in Form eines Stabes 14 in Seitenansicht. Die Dateneingabevorrichtung 10 umfasst ein Gehäuse 16 als Halteelement 18 zur drehbaren und verschiebbaren Lagerung des Stabes 14. Der Stab 14 erstreckt sich durch gegenüberliegende Öffnungen 20, die in gegenüberliegenden Seiten des Gehäuses 16 ausgebildet sind. Diese Öffnungen 20 fluchten mit der Längsachse 22 des Stabes 14.

Innerhalb des Gehäuses 16 ist ein Drehelement 24 in Form eines Rohrstücks 26 drehbar gelagert. Das Rohrstück 26 umgibt den Stab 14 konzentrisch, der von dem Rohrstück 26 drehbar und verschiebbar aufgenommen ist. Im Rohrstück 26 ist ein Längsschlitz 28 ausgebildet, der sich parallel zur Längsachse 22 des Stabes 14 erstreckt.

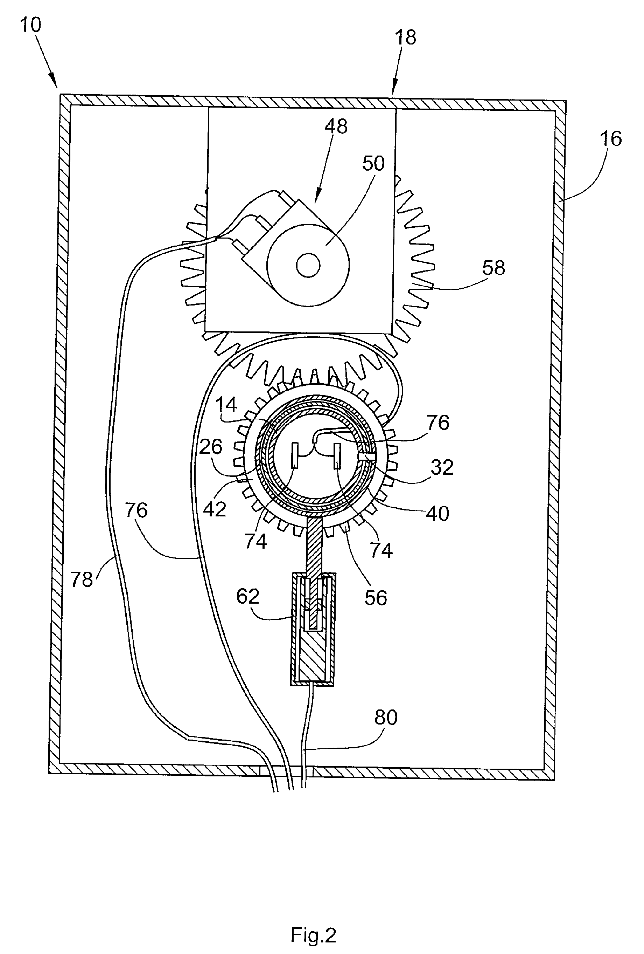

Von dem Stab 14 steht ein erster Mitnehmer 30 in Form eines als Stift ausgebildeten Vorsprungselements 32 radial ab. Dieses Vorsprungselement 32 erstreckt sich durch den Schlitz 28 des Drehelements 24 und radial über dieses hinaus (siehe auch Fig. 2). Bei dem Schlitz 28 handelt es sich ebenfalls um ein Mitnehmer 34, der in diesem Fall am Drehelement 24 angeordnet ist und mit dem Mitnehmer 30 zusammenwirkt.
An dem radial abstehenden Ende des Vorsprungselements 32 ist ein Mitnehmerelement 36 angebracht, das als Ringelement 38 mit einer Nabe 40 und zwei von dieser radial abstehenden Flanschteilen 42 ausgebildet ist. Dieses Ringelement 38 umgibt das Rohrstück 26 von außen mit Spiel.

Auf Grund der Kopplung des Ringelements 38 mit dem Stab 14 über das durch den Schlitz 28 sich hindurch erstreckendes Vorsprungselement 32 wird also beim Linearbewegen des Stabes 14 längs dessen Längsachse 22 in Richtung des Doppelpfeils 44 das Ringelement 38 mit verschoben. Bei Drehung des Stabes 14 um dessen Längsachse 22 in Richtung des Doppelpfeils 46 sorgt das Vorsprungselement 32 dafür, dass nunmehr das Rohrstück 26 mitgedreht wird.

Die Drehbewegung des Stabes 14 wird durch einen Drehwinkelaufnehmer 48 in Form eines Drehpotentiometers 50 erfasst, dessen als Drehwelle ausgebildetes Betätigungsorgan 52 über ein Zahnradgetriebe 54 mit dem Rohrstück 26 gekoppelt ist. Das Rohrstück 26 ist hierbei fest mit einem ersten Zahnrad 56 des Getriebes 54 verbunden. Dieses erste Zahnrad 56 kämmt mit einem zweiten Zahnrad 58, das seinerseits fest mit dem Betätigungsorgan 52 des Drehpotentiometers 50 verbunden ist.

Linearbewegungen des Stabes 14 werden durch einen Wegaufnehmer 60 in Form eines Schiebepotentiometers 62 erfasst, dessen linear verschiebbares Betätigungsorgan 64 in den Zwischenraum zwischen den beiden Flanschteilen 42 des Ringelements 38 eingetaucht ist.

Schließlich befinden sich an den in Längserstreckung des Stabes 14 liegenden stirnseitigen Enden 66 als Taster ausgebildete Schalter 68, deren Betätigungsorgane 70 gegen eine Vorspannung längs der Längsachse 22 betätigbar sind. Die mit den Anschlüssen 74 dieser Schalter 68 verbundenen Kabel 76 erstrecken sich durch den hohlen Stab 14 und sind durch die Wandung des Stabes 14 nahe dem Ringelement 38 und weiter durch den Schlitz 28 des Rohrstücks 26 herausgeführt. Zusammen mit den Kabeln 78 und 80 des Drehpotentiometers 50 und des Schiebepotentiometers 62 sind sie aus dem Gehäuse 16 herausgeführt. An diesen Kabeln können nun die elektrischen Signale abgefragt werden, die die gegenwärtige Drehposition und Verschiebeposition des Stabes 14 sowie die Betätigung der Schalter 68 repräsentieren.

## Patentansprüche

1. Vorrichtung zur Erfassung von Schiebe- und Drehbewegungen eines eine Längsachse aufweisenden länglichen Gegenstandes, insbesondere eines Stabes, entlang der Längsachse und um die Längsachse für die Dateneingabe eines Computers, mit
- einem Haltelement (18), an dem der Gegenstand (12) entlang seiner Längsachse (22) verschiebbar und um seine Längsachse (22) drehbar gelagert ist,
- einem an dem Gegenstand (12) angeordneten ersten Mitnehmer (30),
- einem Drehelement (24), das an dem Halteelement (18) um die Längsachse (22) des Gegenstandes (12) drehbar gelagert und gegen Bewegungen in Richtung der Längsachse (22) des Gegenstandes (12) gesichert angeordnet ist und das einen mit dem ersten Mitnehmer (30) des Gegenstandes (12) zusammenwirkenden zweiten Mitnehmer (34) aufweist,
- einem Drehwinkelaufnehmer (48) zur Erfassung der Drehbewegung des Drehelements (24) und zur Erzeugung eines die Drehstellung und/oder Drehstellungsveränderung des Drehelements (24) repräsentierenden Signals und
- einem Wegaufnehmer (60) zur Erfassung der Bewegung des Gegenstandes (12) bei dessen Verschiebung in Richtung der Längsachse (22) und zur Erzeugung eines die Verschiebeposition und/oder Verschiebepositionsänderung des Gegenstandes (12) repräsentierenden Signals.

2. Dateneingabevorrichtung nach Anspruch 1, **dadurch gekennzeichnet, dass** der erste Mitnehmer (30) als Vorsprungselement (32) des Gegenstandes (12) ausgebildet ist und dass der zweite Mitnehmer (34) als das Vorsprungselement (32) aufnehmender Aufnahmeschlitz (28) des Drehelements (24) ausgebildet ist, der sich parallel zur Längsachse (22) des Gegenstandes (12) erstreckt.

3. Dateneingabevorrichtung nach Anspruch 1, **dadurch gekennzeichnet, dass** der erste Mitnehmer (30) als in Richtung der Längsachse (22) des Gegenstandes (12) erstreckende Vorsprungsrippe ausgebildet ist und dass der zweite Mitnehmer (34) als in Längsrichtung des Gegenstandes (12) verlaufende Aufnahmevertiefung für die Vorsprungsrippe ausgebildet ist.

4. Dateneingabevorrichtung nach einem der Ansprüche 1 bis 3, **dadurch gekennzeichnet, dass** der Drehwinkelaufnehmer (48) ein Drehpotentiometer (50) mit einem drehbar gelagerten Betätigungsorgan (52) aufweist und dass zwischen dem Betätigungsorgan (52) und dem Drehelement (24) ein Getriebe (54) zur Übertragung der Drehbewegung des Drehelements (24) in eine Drehbewegung des Betätigungsorgans (52) angeordnet ist.

5. Dateneingabevorrichtung nach einem der Ansprüche 1 bis 4, **dadurch gekennzeichnet, dass** der Wegaufnehmer (60) als Schiebepotentiometer (62) mit einem verschiebbar angeordneten Betätigungsorgan (64) ausgebildet ist und dass der erste Mitnehmer (30) des Gegenstandes (12) mit einem sich konzentrisch zur Längsachse (22) des Gegenstandes (12) erstreckenden Mitnehmerelement (36) zum Mitnehmen des Betätigungsorgans (64) des Schiebepotentiometers (62) versehen ist.

6. Dateneingabevorrichtung nach Anspruch 5, **dadurch gekennzeichnet, dass** das Mitnehmerelement (36) als Ringelement (38) mit mindestens einem konzentrisch zur Längsachse (22) verlaufenden Flanschteil (42) zum Mitnehmen des Betätigungsorgans (64) des Schiebepotentiometers (62) ausgebildet ist.

7. Dateneingabevorrichtung nach einem der Ansprüche 1 bis 3, **dadurch gekennzeichnet, dass** der Drehwinkelaufnehmer (48) die Drehbewegung des Drehelements (24) berührungslos, insbesondere optisch oder magnetisch erfasst.

8. Dateneingabevorrichtung nach einem der Ansprüche 1 bis 3 oder 7, **dadurch gekennzeichnet, dass** der Wegaufnehmer (60) die Verschiebebewegung des Gegenstandes (12) und/oder des Mitnehmers (30) berührungslos, insbesondere optisch oder magnetisch erfasst.

9. Dateneingabevorrichtung nach einem der Ansprüche 1 bis 8, **dadurch gekennzeichnet, dass** an mindestens einem der beiden in Längserstreckung des Gegenstandes (12) befindlichen Enden (66) ein Druckschalter oder Taster (68) angeordnet ist.

10. Dateneingabevorrichtung nach einem der Ansprüche 1 bis 9, **gekennzeichnet durch** ein weiteres Drehorgan, das drehbar an dem Halteelement (18) gelagert ist und dessen Drehposition und/oder Drehpositionsveränderung mittels eines Detektors erfassbar und in ein Signal umsetzbar ist.

11. Dateneingabevorrichtung nach einem der Ansprüche 1 bis 11, **gekennzeichnet durch** eine Rückstellvorrichtung zum Zurückbewegen des Gegenstandes (12) in eine Nullposition, in der der Gegenstand eine definierte Drehstellung und/oder Verschiebeposition aufweist.

12. Dateneingabevorrichtung nach Anspruch 11, **dadurch gekennzeichnet, dass** die Rückstellvorrichtung Federn zum Zurückbewegen des Gegenstandes (12) nach dessen Bewegung aus der Nullposition aufweist.

13. Dateneingabevorrichtung nach einem der Ansprüche 1 bis 12, **gekennzeichnet durch** Aktuatoren zur Ausübung von Verdrehungs- und/oder Verschiebungskräften auf den Gegenstand (12).

14. Dateneingabevorrichtung nach Anspruch 13, **dadurch gekennzeichnet, dass** der Drehwinkel- und der Wegaufnehmer (48,60) als Aktuatoren zur Verdrehung und/oder Verschiebung des Gegenstandes (12) ausgebildet sind.
